# FASCICULE DE BREVET EUROPEEN

(11) **EP 3 503 318 B1**
(45) Date de publication et mention de la délivrance du brevet: **07.07.2021**
(21) Numéro de dépôt: 18200065.3
(22) Date de dépôt: 12.10.2018
(51) Int. Cl.: H02B 1/20, H01R 9/26, H01R 25/16

(54) **DISPOSITIF DE DISTRIBUTION DU COURANT EN PARTICULIER DANS UN COFFRET OU UN TABLEAU ELECTRIQUE**
STROMVERTEILUNGSVORRICHTUNG, INSBESONDERE IN EINEM ELEKTRISCHEN SCHALTSCHRANK ODER EINER ELEKTRISCHEN SCHALTTAFEL
POWER DISTRIBUTION DEVICE IN PARTICULAR IN A CABINET OR AN ELECTRICAL PANEL

(30) Priorité: 21.12.2017 FR 1762689
(43) Date de publication de la demande: 26.06.2019
(73) Titulaire: Schneider Electric Industries SAS, 92500 Rueil Malmaison (FR)
(72) Inventeur: BURNOT, Claude, 38050 GRENOBLE (FR); BADIN, Didier, 38050 GRENOBLE (FR); BOENSCH, Matthias, 38050 GRENOBLE (FR)
(74) Mandataire: Colette, Marie-Françoise

(56) Documents cités:
- EP-A1- 1 058 348
- EP-A2- 1 881 574

## Description

### DOMAINE TECHNIQUE

La présente invention concerne un dispositif de distribution de courant électrique destiné à alimenter des rangées d'appareillages électriques montés sur un support de montage dans un coffret électrique, comprenant une barre destinée à véhiculer le neutre et au moins une barre destinée à véhiculer une phase, lesdites barres étant disposées sensiblement parallèlement les unes par rapport aux autres, et supportant chacune des éléments de raccordement aptes à coopérer avec des bornes du type à connexion rapide à un câble ou analogue.

### ETAT DE LA TECHNIQUE ANTERIEURE

Dans un coffret ou un tableau électrique, le courant arrive à un appareil de protection électrique dit principal, ou appareil de tête de tableau. Puis, ce courant est réparti sur différents groupes d'appareillage, chaque groupe d'appareillage étant protégé par une seconde protection appelée « tête de groupe », laquelle distribue le courant à tous les appareils de protection de départ de manière à réaliser la protection des charges électriques.

Dans un tel coffret ou tableau, la distribution de courant entre l'appareil principal de protection et les appareillages ou les groupes d'appareillage avals, est réalisée soit par des répartiteurs étagés montés sur rail DIN, généralement sur la rangée supérieure, comportant des barrettes en laiton avec des vis très difficile à raccorder en terme d'accessibilité ou à connexions rapides nécessitant un outil, et qui nécessitent d'avoir des longueurs de câbles importantes pour alimenter les groupes d'appareillage dans les rangées inférieures. Ou bien par des répartiteurs verticaux réalisés avec des barres nues réalisées en cuivre sur lesquelles sont vissés les câbles munis de cosses.

On connaît également le document EP 2 383 849 décrivant un dispositif de raccordement électrique disposé verticalement dans un coffret électrique, ledit dispositif étant destiné à alimenter des rangées horizontales d'appareillages électriques du coffret, ce dispositif comprenant une rangée de barres conductrices verticales parallèles à un axe longitudinal et présentant un plan moyen, chaque barre conductrice étant formée d'une plaquette métallique mince et allongée présentant deux faces principales opposées, les faces principales opposées des plaquettes étant disposées parallèlement les unes aux autres, perpendiculairement au plan moyen de cette rangée.

Le dispositif décrit dans ce document présente cependant un encombrement lui permettant difficilement d'être positionné également horizontalement entre deux rails de fixation.

D'autre part, la disposition des connecteurs sur les barres est telle que le raccordement des barres aux appareils au moyen de câbles nécessite une longueur de câble importante. Et en outre, la connexion des câbles amont et aval nécessite obligatoirement l'utilisation d'un outil.

On connaît le document EP 188 15 74 décrivant les caractéristiques du préambule de la revendication principale.

### EXPOSE DE L'INVENTION

La présente invention résout ces problèmes et propose un dispositif de distribution du courant en particulier dans un coffret ou un tableau électrique, de conception simple et présentant un encombrement réduit, ce dispositif pouvant s'intégrer facilement dans les coffrets actuels en étant positionné soit verticalement soit horizontalement entre deux rails de montages. Ce dispositif permet également de réduire les longueurs des câbles de raccordement et offre une plus grande souplesse de positionnement des rails de montage.

A cet effet, la présente invention a pour objet un dispositif de distribution selon la revendication 1.

Selon une caractéristique particulière, ce dispositif comporte quatre barres comprenant une barre distribuant le neutre et trois barres distribuant chacune une phase.

Selon une caractéristique particulière, ce dispositif comporte à l'une de ses extrémités, quatre bornes d'alimentation raccordées respectivement aux quatre barres, et sur toute la longueur des barres, des bornes de raccordement à des câbles selon une direction de raccordement sensiblement perpendiculaire à la direction longitudinale des barres.

Selon une caractéristique particulière, ce dispositif est monté dans un boîtier réalisé dans un matériau électriquement isolant.

Selon une autre caractéristique, ce dispositif présente une largeur suivant une direction sensiblement perpendiculaire à la direction longitudinale des barres, d'environ 38mm.

Selon une caractéristique particulière, ce dispositif est disposé verticalement dans un coffret ou une armoire électrique afin de distribuer le courant à des rangées horizontales d'appareils électriques.

Selon une autre caractéristique, ce dispositif est disposé horizontalement pour distribuer le courant à chaque appareil installé sur un support de montage horizontal.

La présente invention a encore pour objet un coffret électrique comportant au moins un dispositif de distribution comportant les caractéristiques précédemment mentionnées prises seules ou en combinaison, ce dispositif étant caractérisé en ce qu'il comporte au moins un dispositif de distribution disposé verticalement à l'une des extrémités des supports de montage, et/ou au moins un dispositif de distribution disposé horizontalement entre deux supports de montage successifs.

La présente invention a encore pour objet un tableau électrique, ce tableau étant caractérisé en ce qu'il comporte au moins un dispositif de distribution comportant les caractéristiques précédemment mentionnées prises seules ou en combinaison disposé verticalement à l'une des extrémités des supports de montage, et/ou au moins un dispositif de distribution comportant les caractéristiques précédemment mentionnées prises seules ou en combinaison disposé horizontalement entre deux supports de montages successifs.

Mais d'autres avantages et caractéristiques de l'invention apparaîtront mieux dans la description détaillée qui suit et se réfère aux dessins annexés donnés uniquement à titre d'exemple et dans lesquels :
- La figure 1 est une vue partielle en perspective d'un coffret électrique comportant un dispositif de distribution de courant selon l'invention, disposé verticalement,
- La figure 2 est une vue de face illustrant la partie intérieure d'un coffret électrique comportant plusieurs dispositifs selon l'invention, disposés horizontalement,
- La figure 3 est une vue en perspective illustrant un dispositif de distribution selon l'invention, ainsi qu'une interface de communication destinée à être associée au dispositif, et
- La figure 4 est une vue éclatée du dispositif de distribution selon l'invention.

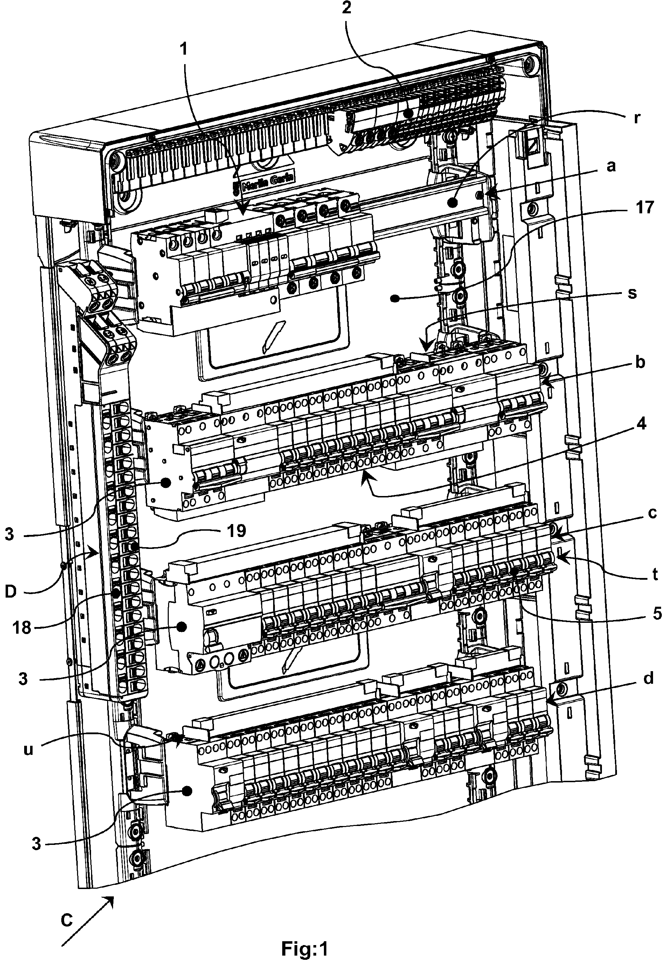

Sur la figure 1, on voit un coffret électrique C comportant quatre rangées d'appareillage a,b,c,d montés sur des rails de montage r,s,t,u,v, lesdits appareillages étant alimentés en courant par un dispositif de distribution de courant D selon l'invention.

Sur le premier rail 1 est monté un appareil de protection principal ou appareil de tête de tableau 1, relié en amont à des moyens d'alimentation électriques 2, et en aval au dispositif de distribution D de manière à alimenter ce dernier en courant.

Sur les trois autres rails s,t,u,v sont disposés différents groupes d'appareillage protégé par un appareil dit tête de groupe 3, lequel est alimenté en courant par le dispositif de distribution D selon l'invention, pour ensuite distribuer le courant à tous les appareils de protection de départ 4,5. Selon cette réalisation de l'invention illustrée, le dispositif de distribution D est disposé verticalement dans le coffret C, entre une paroi latérale du coffret, et une extrémité des rails de montage r,s,t,u,v.

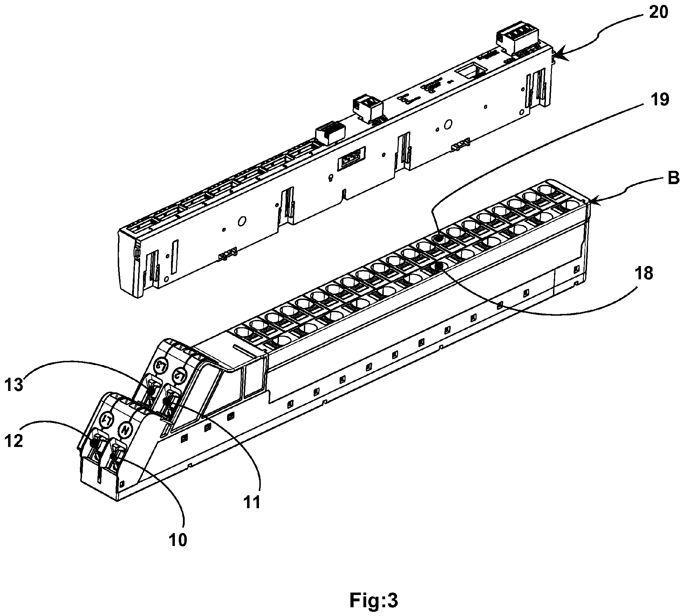

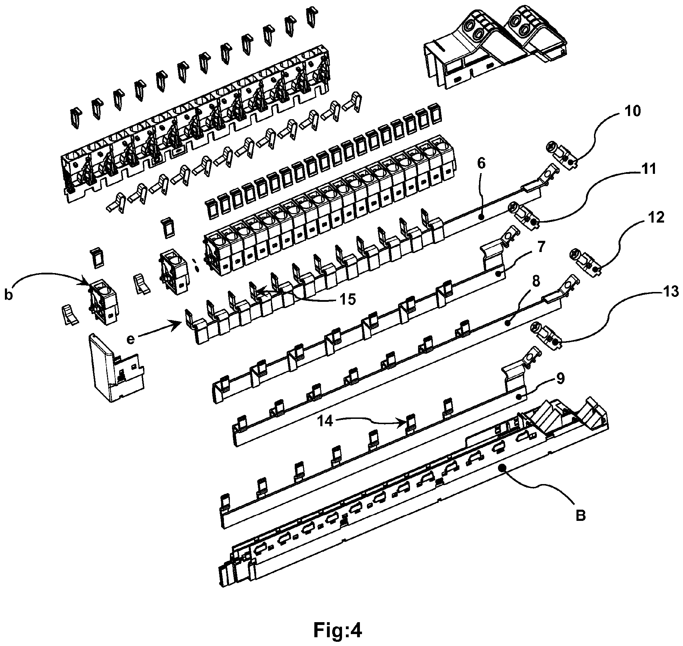

Tel qu'également illustré sur les figures 3 et 4, ce dispositif est monté dans un boîtier B réalisé dans un matériau électriquement isolant.

Dans ce boîtier B sont logés une barre 6 destinée à véhiculer le neutre et trois barres 7,8,9 destinées à véhiculer chacune une phase, lesdites barres étant disposées sensiblement parallèlement les unes par rapport aux autres, et supportant chacune des éléments de raccordement e aptes à coopérer avec des bornes b du type à connexion rapide à un câble ou analogue.

Ce dispositif comporte à l'une de ses extrémités, quatre bornes d'alimentation 10,11,12,13 raccordées respectivement aux quatre barres 6 à 9, et sur toute la longueur des barres, des bornes de raccordement b à des câbles selon une direction de raccordement sensiblement perpendiculaire à la direction longitudinale des barres.

Ces barres et les éléments de raccordement sont disposés les uns par rapport aux autres, de telle manière que les éléments de raccordement 14 des différentes phases sont alignés successivement et de manière répétitive selon une première direction longitudinale, tandis que les éléments de raccordement de neutre 15 sont alignés suivant une seconde direction longitudinale parallèle à la première, de manière à offrir une accessibilité à une connexion de neutre 15 et à une connexion de chacune des phases 14 tout le long du dispositif.

Tel que plus particulièrement illustré sur la figure 4, chaque barre 6 à 9 est constituée par une plaquette métallique mince, lesdites plaquettes s'étendant dans des plans sensiblement parallèles les uns par rapport aux autres. Les éléments de raccordement 14 de chaque barre de phase 7 à 9 comportent chacun une partie aplatie, ces parties aplaties étant toutes situées dans un même plan dit premier, ce plan dit premier étant parallèle au plan dans lequel s'étend la barre de phase correspondante 7 à 9, tandis que les éléments de raccordement 15 de la barre de neutre 6 comportent chacun une partie aplatie, les différentes parties aplaties s'étendant respectivement dans des plans parallèles les uns par rapport aux autres, et sensiblement perpendiculaires au plan dans lequel s'étend la barre de neutre 6.

Avantageusement, ce dispositif présente une largeur suivant une direction perpendiculaire à la direction longitudinale des barres 6 à 9, d'environ 38mm.

Avantageusement, le dispositif de distribution selon l'invention comporte au moins trois points de fixation latéraux destinés à être utilisés dans le cas d'un montage vertical du dispositif.

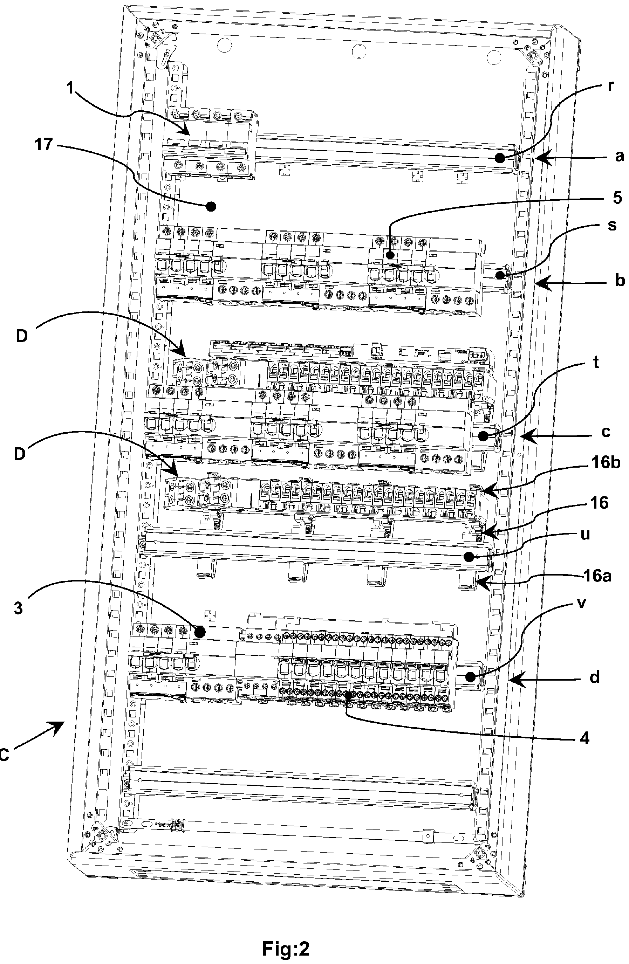

Tel qu'illustré sur la figure 2, selon une autre réalisation, le coffret C est équipé de plusieurs dispositifs de distribution D selon l'invention disposés horizontalement dans le coffret, chaque dispositif étant disposé entre deux rails DIN s,t,u et étant destiné à distribuer le courant directement aux appareils de protection des départs 4,5.

Selon cette réalisation particulière illustrée, des pieds de rail 16 sont fixés sur la paroi de fond 17 du coffret C. Ces pieds de rail 16 comportent une partie inférieure 16a destinée à venir s'encliqueter sur la partie arrière du rail t,u, et une partie supérieure 16b comportant un évidement destiné à recevoir la fixation par encliquetage du dispositif de distribution de courant D selon l'invention, ainsi qu'une interface de communication 20.

On a donc réalisé selon l'invention un dispositif de distribution de courant complètement isolé, présentant une grande compacité, étant d'une largeur maximum de 38 mm, étant positionnable horizontalement et verticalement, présentant des bornes disponibles tout le long du dispositif. Ceci lui permet de présenter une accessibilité à une connexion de neutre et à une connexion de chacune des phases tout le long du dispositif afin d'alimenter électriquement un appareil multipolaire se trouvant sur la rangée d'appareils proche de ces connexions. On dispose ainsi de connexions au neutre 18 proches des connexions de phase 19 et disposées tout le long du dispositif. Ce dispositif présente une forme lui permettant de s'intégrer dans les coffrets actuels en prenant en compte les pieds de rail.

Le raccordement s'effectue sans outil grâce aux bornes du type à connexion rapide. L'installateur bénéficie d'un gain de temps de raccordement du coffret électrique ou tableau électrique.

Cette invention peut être utilisée dans les tableaux électriques quels qu'ils soient, et quel que soit leur lieu d'installation.

On notera qu'une variante de réalisation pourra consister à avoir une alimentation électrique du dispositif de distribution dans une direction transversale par rapport à l'alignement des bornes aval.

Bien entendu, l'invention n'est limitée que par les revendications annexées.

## Revendications

1. Dispositif de distribution de courant électrique destiné à alimenter des rangées d'appareillages électriques montés sur un support de montage dans un coffret électrique, comprenant une barre destinée à véhiculer le neutre et au moins une barre destinée à véhiculer une phase, lesdites barres étant disposées sensiblement parallèlement les unes par rapport aux autres, et supportant chacune des éléments de raccordement aptes à coopérer avec des bornes du type à connexion rapide à un câble, les barres (6 à 9) et les éléments de raccordement précités e étant disposés les uns par rapport aux autres, de telle manière que les éléments de raccordement (14) des différentes phases sont alignés successivement et de manière répétitive selon une première direction longitudinale, tandis que les éléments de raccordement de neutre (15) sont alignés suivant une seconde direction longitudinale parallèle à la première, de manière à offrir une accessibilité à une connexion de neutre et à une connexion de chacune des phases tout le long du dispositif de distribution de courant électrique, chaque barre (6 à 9) est constituée par une plaquette métallique mince, lesdites plaquettes s'étendant dans des plans sensiblement parallèles les uns par rapport aux autres, et les éléments de raccordement (14) de chaque barre de phase (7,8,9) comportent chacun une partie aplatie, ces parties aplaties étant toutes situées dans un même plan dit premier, **caractérisé en ce que** ce plan dit premier est parallèle au plan dans lequel s'étend la barre de phase (7,8,9), tandis que les éléments de raccordement (15) de la barre de neutre (6) comportent chacun une partie aplatie, les différentes parties aplaties s'étendant respectivement dans des plans parallèles les uns par rapport aux autres, et sensiblement perpendiculaires au plan dans lequel s'étend la barre de neutre (6).

2. Dispositif de distribution selon la revendication 1, **caractérisé en ce qu'**il comporte quatre barres (6 à 9) comprenant une barre (6) distribuant le neutre et trois barres (7,8,9) distribuant chacune une phase.

3. Dispositif de distribution selon la revendication 1 ou 2, **caractérisé en ce qu'**il comporte à l'une de ses extrémités, quatre bornes d'alimentation (10 à 13) raccordées respectivement aux quatre barres (6 à 9), et sur toute la longueur des barres, des bornes de raccordement (b) à des câbles selon une direction de raccordement sensiblement perpendiculaire à la direction longitudinale des barres (6 à 9).

4. Dispositif de distribution selon l'une quelconque des revendications précédentes, **caractérisé en ce qu'**il est monté dans un boîtier réalisé dans un matériau électriquement isolant.

5. Dispositif de distribution selon l'une quelconque des revendications précédentes, **caractérisé en ce qu'**il présente une largeur suivant une direction sensiblement perpendiculaire à la direction longitudinale des barres, d'environ 38mm.

6. Utilisation d'un dispositif de distribution selon l'une quelconque des revendications précédentes, **caractérisé en ce qu'**il est disposé verticalement dans un coffret C ou une armoire électrique afin de distribuer le courant à des rangées horizontales (a,b,c,d) d'appareils électriques.

7. Utilisation d'un dispositif de distribution selon l'une quelconque des revendications 1 à 5, **caractérisé en ce qu'**il est disposé horizontalement pour distribuer le courant à chaque appareil (4,5) installé sur un support de montage horizontal.

8. Coffret électrique comportant au moins un dispositif de distribution selon l'une quelconque des revendications 1 à 5, **caractérisé en ce qu'**il comporte au moins un dispositif de distribution D disposé verticalement à l'une des extrémités des supports de montage (r,s,t,u,v) et/ou au moins un dispositif de distribution D disposé horizontalement entre deux supports de montage successifs.

9. Tableau électrique comportant au moins un dispositif de distribution selon l'une quelconque des revendications 1 à 5, **caractérisé en ce qu'**il comporte au moins un dispositif de distribution D disposé verticalement à l'une des extrémités des supports de montage (r,s,t,u,v) et/ou au moins un dispositif de distribution D disposé horizontalement entre deux supports de montage successifs.

## Patentansprüche

1. Vorrichtung zur Verteilung von elektrischem Strom, die dazu bestimmt ist, Reihen von elektrischen Geräten, die in einem elektrischen Schaltschrank an einem Montageträger montiert sind, mit Strom zu versorgen, beinhaltend eine Schiene, die dazu bestimmt ist, den Neutralleiter zu führen, und mindestens eine Schiene, die dazu bestimmt ist, eine Phase zu führen, wobei die Schienen im Wesentlichen parallel zueinander angeordnet sind und jeweils Anschlusselemente tragen, die mit Klemmen vom Typ Kabelschnellverbinder zusammenwirken können, wobei die Schienen (6 bis 9) und die vorgenannten Anschlusselemente e so zueinander angeordnet sind, dass die Anschlusselemente (14) der unterschiedlichen Phasen aufeinanderfolgend und sich wiederholend gemäß einer ersten Längsrichtung ausgerichtet sind, während die Anschlusselemente des Neutralleiters (15) gemäß einer zweiten Längsrichtung, die zu der ersten parallel ist, ausgerichtet sind, um über die gesamte Länge der Vorrichtung zur Verteilung von elektrischem Strom einen Zugriff auf eine Neutralleiterverbindung und auf eine Verbindung jeder der Phasen zu ermöglichen, wobei jede Schiene (6 bis 9) aus einer dünnen Metallplatte besteht, wobei sich die Platten in Ebenen, die im Wesentlichen zueinander parallel sind, erstrecken und wobei die Anschlusselemente (14) jeder Phasenschiene (7, 8, 9) jeweils einen abgeflachten Teil umfassen, wobei diese abgeflachten Teile alle in einer gleichen sogenannten ersten Ebene liegen, **dadurch gekennzeichnet, dass** diese sogenannte erste Ebene parallel zu der Ebene ist, in der sich die Phasenschiene (7, 8, 9) erstreckt, während die Anschlusselemente (15) der Neutralleiterschiene (6) jeweils einen abgeflachten Teil umfassen, wobei sich die unterschiedlichen abgeflachten Teile jeweils in zueinander parallelen Ebenen und im Wesentlichen senkrecht zu der Ebene, in der sich die Neutralleiterschiene (6) erstreckt, erstrecken.

2. Verteilungsvorrichtung nach Anspruch 1, **dadurch gekennzeichnet, dass** sie vier Schienen (6 bis 9) umfasst, die eine Schiene (6), die den Neutralleiter verteilt, und drei Schienen (7, 8, 9), die jeweils eine Phase verteilen, beinhalten.

3. Verteilungsvorrichtung nach Anspruch 1 oder 2, **dadurch gekennzeichnet, dass** sie an einem ihrer Enden vier Versorgungsklemmen (10 bis 13), die jeweils an die vier Schienen (6 bis 9) angeschlossen sind, und über die gesamte Länge der Schienen Klemmen für den Anschluss (b) an Kabel gemäß einer Anschlussrichtung, die zu der Längsrichtung der Schienen (6 bis 9) im Wesentlichen senkrecht ist, umfasst.

4. Verteilungsvorrichtung nach einem der vorhergehenden Ansprüche, **dadurch gekennzeichnet, dass** sie in einem Gehäuse montiert ist, das aus einem elektrisch isolierenden Material hergestellt ist.

5. Verteilungsvorrichtung nach einem der vorhergehenden Ansprüche, **dadurch gekennzeichnet, dass** sie gemäß einer Richtung, die zu der Längsrichtung der Schienen im Wesentlichen senkrecht ist, eine Breite von ungefähr 38 mm aufweist.

6. Verwendung einer Verteilungsvorrichtung nach einem der vorhergehenden Ansprüche, **dadurch gekennzeichnet, dass** sie in einem elektrischen Schaltschrank C oder einem Elektroschrank vertikal angeordnet ist, um den Strom an horizontale Reihen (a, b, c, d) von elektrischen Geräten zu verteilen.

7. Verwendung einer Verteilungsvorrichtung nach einem der Ansprüche 1 bis 5, **dadurch gekennzeichnet, dass** sie horizontal angeordnet ist, um den Strom an jedes Gerät (4, 5), das an einem horizontalen Montageträger installiert ist, zu verteilen.

8. Elektrischer Schaltschrank, der mindestens eine Verteilungsvorrichtung nach einem der Ansprüche 1 bis 5 umfasst, **dadurch gekennzeichnet, dass** er mindestens eine Verteilungsvorrichtung D, die an einem der Enden der Montageträger (r, s, t, u, v) vertikal angeordnet ist, und/oder mindestens eine Verteilungsvorrichtung D, die zwischen zwei aufeinanderfolgenden Montageträgern horizontal angeordnet ist, umfasst.

9. Elektrische Schalttafel, die mindestens eine Verteilungsvorrichtung nach einem der Ansprüche 1 bis 5 umfasst, **dadurch gekennzeichnet, dass** sie mindestens eine Verteilungsvorrichtung D, die an einem der Enden der Montageträger (r, s, t, u, v) vertikal angeordnet ist, und/oder mindestens eine Verteilungsvorrichtung D, die zwischen zwei aufeinanderfolgenden Montageträgern horizontal angeordnet ist, umfasst.

## Claims

1. Electric current distribution device that is intended to supply power to rows of electrical switchgear that are mounted on a mounting support in an electrical panel, comprising one busbar that is intended to convey the neutral and at least one busbar that is intended to convey a phase, said busbars being positioned substantially in parallel with respect to one another, and each bearing connection elements that are capable of cooperating with terminals of quick connection type for connection to a cable, the busbars (6 to 9) and the aforementioned connection elements e being positioned with respect to one another such that the connection elements (14) of the various phases are aligned successively and repeatedly in a first longitudinal direction, whereas the connection elements of the neutral (15) are aligned in a second longitudinal direction that is parallel to the first, so as to provide accessibility for connection to the neutral and for connection to each of the phases along the entire length of the electric current distribution device, each busbar (6 to 9) is formed by a thin metal plate, said plates extending in planes that are substantially in parallel with respect to one another, and the connection elements (14) of each phase busbar (7,8,9) each include a flattened part, these flattened parts all being situated in one and the same plane, called first plane, **characterized in that** this plane called first plane is parallel to the plane in which the phase busbar (7,8,9) extends, whereas the connection elements (15) of the neutral busbar (6) each include a flattened part, the various flattened parts extending respectively in planes that are in parallel with respect to one another and substantially perpendicular to the plane in which the neutral busbar (6) extends.

2. Distribution device according to Claim 1, **characterized in that** it includes four busbars (6 to 9) comprising one busbar (6) distributing the neutral and three busbars (7,8,9) each distributing a phase.

3. Distribution device according to Claim 1 or 2, **characterized in that** it includes, at one of its ends, four power supply terminals (10 to 13) that are connected respectively to the four busbars (6 to 9), and, over the entire length of the busbars, terminals (b) for connection to cables in a connection direction substantially perpendicular to the longitudinal direction of the busbars (6 to 9).

4. Distribution device according to any one of the preceding claims, **characterized in that** it is mounted in a housing made of an electrically insulating material.

5. Distribution device according to any one of the preceding claims, **characterized in that** it has a width, in a direction substantially perpendicular to the longitudinal direction of the busbars, of around 38 mm.

6. Use of a distribution device according to any one of the preceding claims, **characterized in that** it is positioned vertically in an electrical panel C or enclosure so as to distribute the current to horizontal rows (a,b,c,d) of electrical units.

7. Use of a distribution device according to any one of Claims 1 to 5, **characterized in that** it is positioned horizontally so as to distribute the current to each unit (4,5) installed on a horizontal mounting support.

8. Electrical panel including at least one distribution device according to any one of Claims 1 to 5, **characterized in that** it includes at least one distribution device D positioned vertically at one of the ends of the mounting supports (r,s,t,u,v) and/or at least one distribution device D positioned horizontally between two successive mounting supports.

9. Electrical switchboard including at least one distribution device according to any one of Claims 1 to 5, **characterized in that** it includes at least one distribution device D positioned vertically at one of the ends of the mounting supports (r,s,t,u,v) and/or at least one distribution device D positioned horizontally between two successive mounting supports.
